# EUROPÄISCHE PATENTSCHRIFT

(11) **EP 1 356 326 B1**
(45) Veröffentlichungstag und Bekanntmachung des Hinweises auf die Patenterteilung: **22.03.2006**
(21) Anmeldenummer: 01996765.2
(22) Anmeldetag: 14.11.2001
(51) Int. Cl.: G02B 6/25, B26D 3/16

(54) **ZANGENARTIGES WERKZEUG UND VERFAHREN ZUM DURCHTRENNEN VON LICHTWELLENLEITERKABELN**
PLIERS-TYPE TOOL AND METHOD FOR CUTTING THROUGH OPTICAL FIBRE CABLES
OUTIL EN FORME DE PINCE ET PROCEDE PERMETTANT DE SECTIONNER DES CABLES A FIBRES OPTIQUES

(30) Priorität: 16.11.2000 DE 10056780; 19.12.2000 DE 10063209
(43) Veröffentlichungstag der Anmeldung: 29.10.2003
(73) Patentinhaber: Rennsteig Werkzeuge GmbH, 98547 Viernau/Thür (DE)
(72) Erfinder: WILHELM, Edgar, 98587 Altersbach (DE); HOLLAND-MORITZ, Georg, 98587 Rotterode (DE); TOMAS, Bernd, 98587 Rotterode (DE)
(86) Internationale Anmeldenummer: PCT/DE2001/004278
(87) Internationale Veröffentlichungsnummer: WO 2002/041059

(56) Entgegenhaltungen:
- EP-A- 0 829 331
- DE-A- 19 842 122
- US-A- 4 445 632
- US-A- 4 643 520
- US-A- 5 046 252

## Beschreibung

Die Erfindung betrifft ein zangenartiges Werkzeug und ein Verfahren zum Durchtrennen von Lichtwellenleiterkabeln (LWL) gemäß der Oberbegriffe von Anspruch 1 und 3.

Zangenartige Werkzeuge und Verfahren zum Durchtrennen von Kabeln, auch solcher für Lichtwellenleiter, sind bekannt (DE 3406917; DE 3436668; DE 3509991; DE 3802577).
Diese Werkzeuge, vorwiegend als von Hand betätigbare Zangen ausgeführt und zum Durchschneiden und teilweise auch zum Abziehen von Kabelisolierungen ausgelegt, genügen bezüglich der funktionellen Eigenschaften der dort benutzten Schneidvorrichtungen nicht mehr den Anforderungen, die an die Qualität der Trenn- oder Schnittstelle an LWL-Kabeln gestellt werden.
Beim Trennen von Lichtwellenleiterkabeln (LWL) genügt es nämlich nicht, einen einfachen Trennschnitt auszuführen, wie das bei Elektrokabeln üblich ist. Hier kommt es vielmehr darauf an, den Trennschnitt in bezug auf die Beschaffenheit der Schnittfläche an der Lichtwellenleiterfaser in höchster Qualität auszuführen. Die Qualitätsansprüche bestehen hierbei darin, die Schnittfläche absolut glatt und rechtwinklig zur Faserlängsachse auszuführen und gleichzeitig ihre Oberfläche mit bester Oberflächengüte herzustellen.

Auch die von der Anmelderin schon früher, mit der DE-OS 19842122 in Vorschlag gebrachte Schneid- bzw. Trennvorrichtung in einem zangenartig zu handhabenden Werkzeug zum Ausführen verschiedenartiger Arbeiten an Lichtwellenleiterkabeln vermag die derzeitigen Anforderungen an die Qualität der Schnittfläche in makro- und mikrogeometrischen Maßstäben nicht mehr ausreichend zu erfüllen.

Zur weiteren Verbesserung dieser Schneidtechnik wurde von der Anmelderin schließlich eine Schneidvorrichtung in Vorschlag gebracht (DE 10056780.0), bei der in verschiedenen Verfahrensschritten die Aufnahme sowie die lagebestimmende Halterung und Klemmung des LWL-Kabels in neuer Art und Weise vorgenommen und das Schneidmesser für die Ausführung präziserer Trennschnitte ausgelegt worden ist.
Mit dieser dort vorgeschlagenen Verfahrensweise sowie der funktionellen Vervollkommnung der Schneidvorrichtung sind neue Wege in der Schneidtechnik für LWL-Kabel beschritten worden, die in der Anwenderpraxis beim Verarbeiten von Lichtleiterkabeln bereits ihre positive Bestätigung gefunden haben.

Obgleich mit diesen Vervollkommnungen ersichtliche Verbesserungen erreicht worden sind, bleibt beim handwerklichen Umgang mit solchen Spezialwerkzeugen ein Umstand außerhalb der hier notwendigen Kontrolle, wenn es darum geht, eine gleichbleibend gute Qualität der Trenn- bzw. Schnittfläche am LWL-Kabel sicherzustellen oder zu garantieren.
Da die Schnittqualität in hohem Maße vom Zustand und der Güte der Messerschneide abhängig ist, erscheint es zwingend erforderlich, Vorkehrungen dafür zu treffen, dass dem Anwender bzw. Monteur beim sich immer wiederholenden Benutzen der Schneidvorrichtung stets eine brauchbare, scharfe Messerschneide zur Verfügung steht, ohne dass es hierzu seines aktiven Handelns oder Einwirkens durch Nachstellen des Schneidmessers auf eine andere, neue Schneidenzone bedarf.
Diese bisher subjektive Einschätzung sollte auch aus anderen Gründen nicht nur dem Anwender bzw Monteur überlassen bleiben. Sie sollte vielmehr mit selbsttätiger Wirkung dem Zangenwerkzeug in Form eines dort installierten Kontrollmechanismusses eigen sein, indem sie dieses nach angemessenem Gebrauch stillsetzt.

In dieser Anforderung nach verbesserter, objektiv wirksamerer Kontrolle der Schneideigenschaften des Schneidmessers besteht ein weiterer Zweck der vorliegenden Erfindung.

Auf der Grundlage der genannten Zweckbestimmungen liegt der Erfindung die Aufgabe zugrunde, ein Werkzeug mit Schneidvorrichtung sowie ein Verfahren zum Trennen von Lichtwellenleiterkabeln anzugeben, das in prinzipiell bekannter Weise in eine von Hand betätigte Zange integriert ist, die durch eine ebenso bekannte, unabhängig von der ZangenSchließbewegung betätigbare, Handhabe zur Wirkung bringbar ist und die in verfahrensseitig vervollkommnender Weise in bisher nicht erreichter Qualität einen präzisen, rechtwinklig zur Kabelachse verlaufenden und an der Schnittfläche eine hohe Oberflächengüte erzeugenden Trennschnitt erreichen lässt und die zur Gewährleistung dieser Qualitätsansprüche weiterhin mit einem zwangsweise wirksamen Kontrollmechanismus versehen sein soll, mit dessen Hilfe die Benutzungsdauer der Schneide durch Begrenzung der Anzahl der Schnitte eines Schneidabschnittes des Schneidmessers vorbestimmbar ist, bevor die Schneidvorrichtung gänzlich und zwangsweise stillgesetzt wird.

Zur Lösung dieser Aufgabe wird ein Werkzeug vorgeschlagen, welches die in den Patentansprüchen charakterisierten Merkmale aufweist und mit der dort näher beschriebenen Schneidvorrichtung an einer von Hand betätigten Zange die in Vorschlag gebrachte Verfahrensweise durchzuführen gestattet. In einem ersten Lösungskomplex zur Aufgabenstellung werden mit der exakten lagebestimmenden Aufnahme, der lagesichemden Halterung sowie der neuartig vorteilswirkenden Abstützung des LWL-Kabels zwischen den Zangenmaulbacken die Vorbedingungen für einen Trennschnitt von hoher Qualität erfüllt, während in einem zweiten Lösungskomplex der Aufgabenstellung mit einem während des Schneid- bzw. Trennvorganges unabhängig von der Bedienungsperson betätigten Schaltwerk die hohen Gebrauchseigenschaften des Schneidmessers durch die Bereitstellung eines stetig neuen, unverbrauchten Schneidenabschnittes am Schneidmesserumfang gewährleistet werden.

Dieses der Schneidvorrichtung zugehörige Schaltwerk bewirkt, dass nach einer bestimmten Anzahl von durch eine Handhabe eingeleiteten Schneidhüben mit der Schneidvorrichtung, das Schneidmesser jeweils um einen am Umfang bemessenen Teilschritt weitergedreht bzw. weitergeschaltet wird, um am Schneidmesserumfang jeweils einen bis dahin unverbrauchten, neuen Schneidenabschnitt bereitzustellen. Die daraus resultierenden Vorzüge liegen auf der Hand und bedürfen offenbar keiner gesonderten Darstellung.

Die erfindungsgemäße technische Lösung samt ihrer Lösungselemente sind in den Patentansprüchen näher charakterisiert und im Ausführungsbeispiel nebst zugehöriger Zeichnung erläutert.

Die Zeichnung zeigt in
- Fig. 1: das zangenartig zu handhabende Schneid- und Crimpwerkzeug mit einer Schneidvorrichtung perspektiver Seitenansicht;
- Fig. 2: die Seitenansicht einer Einzelheit, darstellend das Klemmbackenpaar mit der Kabelklemmeinrichtung für die neuartigen vorteilhaften Verfahrensschritte;
- Fig. 3: die Draufsicht auf die untere Klemmbacke mit der Schneidvorrichtung in Wirkstellung;
- Fig. 4: die Seitenansicht auf die Aufnahme und Klemmhalterung des Schneidmessers;
- Fig. 5: den Querschnitt der Schneidmesserschneide in stark vergrößertem Maßstab, entsprechend der Einzelheit "A" in Fig. 4;
- Fig. 6: den Kopfteil einer LWL-Schneid- und Crimpzange mit integriertem Schaltwerk für das Schneidmesser;
- Fig. 7: eine Einzelheit aus Fig. 6, die Schaltklinke sowie den Rastzahn darstellend;
- Fig. 8: die Vorderansicht der Schneid- und Crimpzange mit dem Schneidmesser und dem Schaltwerk im Schnitt nach der Linie I - I in Fig. 6

Der Aufbau der Schneidvorrichtung an einer von Hand betätigbaren Zange 1, mit der verschiedene Arbeiten an Lichtwellenleiterkabeln, wie z. B. das Abisolieren, das Trennen und Vercrimpen ausgeführt werden können, sieht eine spezielle Schneidtechnik vor, die das Kabelende exakt, d. h. rechtwinklig zur Faserlängsachse und in guter Oberflächenqualität der Schnittfläche zu trennen vermag.

Die Zange 1 ist dabei in prinzipiell bekannter Bauart ausgeführt. Sie besteht aus einem festen Maulbacken 2, einem beweglichen Maulbacken 3 sowie aus Handgriffen 4 und 5 und ist über einen in Funktion und Ausführung üblichen Kniehebeltrieb 6 und 7 in geöffnete oder geschlossene Stellung zu bringen.

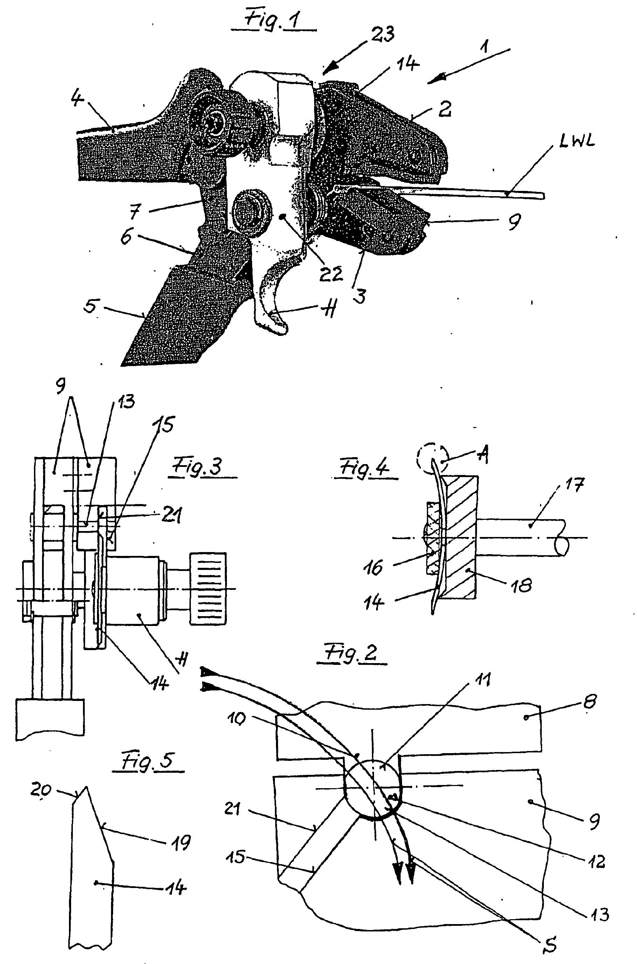

An den Maulbacken 2 und 3 sind speziell ausgebildete Klemmbacken 8 und 9 fest, jedoch austauschbar, befestigt, die jeweils ein der Größe des LWL-Kabels angemessenes Klemmprofil tragen, wie das in Fig. 2 gezeigt ist.

Das am oberen, relativ festen Klemmbacken 8 angebrachte, leistenförmige Klemmprofil 10 besitzt eine quer zum Zangenmaul verlaufende konkave Klemmfläche 11. Das am unteren, relativ beweglichen Klemmbacken 9 angebrachte Klemmprofil 12 ist als Nut 13 ausgebildet und bildet zusammen mit der Klemmfläche 11 einen runden kreisförmigen Querschnitt, in dem das LWL-Kabel eine gänzlich formschlüssige Aufnahme findet.

Der in Fig. 2 dargestellte Formschluß ist dem Durchmesser des LWL-Kabels genau angepaßt, so dass dieses bei geschlossener Zange unverrückbar, ohne jegliches Spiel in Längs- und Querrichtung aufgenommen ist. Zudem wird es beim Schließen der Maul- bzw. Klemmbacken 8 und 9 in seiner Aufnahme derart eingespannt, dass es unter dem Einfluß des Schnittdruckes durch das Schneidmesser 14 seine ihm zugemessene räumliche Lage nicht zu verändern vermag.

Eine weitere Besonderheit der erfindungsgemäßen Schneidtechnik besteht unter der vorgenannten Einspannlage auch darin, dass das am Klemmbacken 9 angeordnete Klemmprofil 12 nach dem Abschnittende des LWL-Kabels hin, also ab dem Schneidmesser 14, seitlich freigearbeitet ist, wie das in Fig. 2 mit der Freimachung 15 ersichtlich gemacht wurde. In diesem äußeren Bereich ist also das LWL-Kabel nicht gänzlich von den Klemmprofilen 11; 12 umschlossen, sondern nurmehr am unteren Abschnitt des Klemmprofils 12 abgestützt, wie das in Fig. 2 mit dicker Linie verdeutlicht ist. Es vermag daher dem seitlich wirkenden Schnittdruck durch das mit der Handhabe "H" einschwenkend betätigte Schneidmesser 14 im angemessenen Umfang nachzugeben, ohne jedoch seine räumliche Lage verändern zu können. Der äußere Abschnitt des Klemmprofiles 12, bzw. der Nut 13 ist überdies für einen glatten Schittverlauf nach außen, d. h. nach dem freien Ende des LWL-Kabels hin, geringfügig geneigt ausgeführt, was sich in Abhängigkeit von der Kabelart und -größe beim Schneidvorgang als vorteilhaft gezeigt hat.

Weitere Merkmale der erfindungsgemäßen Schneidtechnik bestehen auch in der Ausführung des Schneidmessers 14, welches für den auszuführenden Schneid- bzw. Trennvorgang an LWL-Kabeln neuartige und vorteilhafte Wirkungen in bezug auf die Qualität der Trennfläche am Funktionsteil des Kabels erreichen läßt.

Zunächst sieht die Aufnahme und Halterung für das Schneidmesser 14 eine in der Messerebene vorgesehene axiale Verspannung vor, wie das in Fig. 4 in stark vergrößerter Darstellung angedeutet ist. Diese Verspannung mit Hilfe einer Spannscheibe 16 verleiht dem Schneidmesser 14 gegenüber dem Normalzustand eine größere innere Stabilität in der Schneidebene, so das jegliches Wegbiegen desselben ausgeschlossen ist.

Die axiale Verspannung des Schneidmessers 14 auf der Welle 17 gegen den Anlageflansch 18 führt außerdem zusammen mit der Schneidenfase 19 zu Vorteilswirkungen dergestalt, dass während der Ausführung des Trennschnittes am fest eingespannten LWL-Kabel an der sog. Kabelseele eine axiale nach innen gerichtete Druckkomponente wirksam wird. Diese führt zu einem Effekt, der polierende Wirkung zeigt und der die Oberfläche der Kabelseele gewünschtermaßen glättet. Um diesen Effekt um ein weiteres zu erhöhen, erhält die Schneidenfase 19 eine im Mikrobereich ausgeführte Schneidlippe 20, deren Wirkung es ist, die Schnittfläche an der Seele des LWL-Kabels druckpolierend zu glätten, um an der dadurch geglätteten Kontaktfläche jegliche Streuverluste der zu übertragenden Lichtenergie zu vermeiden. Die Schneidlippe 20 kann zudem noch leicht gewölbt ausgeführt sein, welcher Umstand sich um ein weiteres als vorteilhaft erwiesen hat.

Die Verfahrensweise und die Handhabung der Schneidvorrichtung zum Trennen von Lichtwellenleiterkabeln mit einer Zange des bezeichneten Bautyps ist folgende:

Ausgehend von der Aufgabe, einen neuen Kontakt an einem Lichtwellenleiter fachgerecht zu setzen und dazu einen Trennschnitt auszuführen, wird nach dem Öffnen der beiden Maulbacken 2; 3 das Kabelende, wie in Fig. 2 veranschaulicht, in die Klemmbacken 8; 9 und dort präzise in das Klemmprofil 12 eingelegt, um anschließend durch die Schließbewegung der Zangenhandgriffe 4; 5 gegen das in seiner Form analog gestaltete Klemmprofil 11 des dem festen Maulbacken 2 bzw. Klemmbacken 8 zugehörigen Klemmprofiles 10 angedrückt zu werden. Damit wird ein unverrückbar fester Sitz des Kabels hergestellt und dieser mit Hilfe des für solche Zangen üblichen Hebeltriebes in der Endstellung fixiert.

Dann erfolgt das Schneiden bzw. Trennen des LWL-Kabeis, unter Verwendung der bei geschlossener Zange zu betätigenden Schneidvorrichtung, wozu in bekannter Weise die als Schwenkarm ausgebildete Handhabe H mit einem Finger der Betätigungshand in der Schneidrichtung "S" geschwenkt wird.

Im Zuge dieser Schwenkbewegung gelangt das Schneidmesser 14 zunächst seitlich an die Schnittkante 21 des Klemmbackens 9 und wird dort mit einer regelbaren Vorspannung abgestützt, um beim Schneiden keinerlei Spiel an der Schnittkante 21 zuzulassen. Da das Schneidmesser 14 ohnedies in axialer Richtung vorgespannt ist, siehe Fig. 4, ergibt sich beim weiteren Fortschreiten der Schneidbewegung ein gänzlich spielfreies Durchtrennen des Kabels, mit jenen Oberflächeneffekten, wie sie vorstehend erwähnt worden sind.

Nach Beendigung des Schneid- bzw. Trennvorganges kehrt der Schwenkarm mit dem Schneidmesser 14 in seine Ausgangslage unter Federzug selbsttätig zurück. Die Zange kann in der üblichen Weise geöffnet und das LWL-Kabel aus den Klemmprofilen entnommen werden.

In weiterer Vervollkommnung dieses Zangentyps wurde der dort integrierten Schneidvorrichtung für die Lichtwellenleiterkabel ein Schaltwerk zugeordnet. Dieses Schaltwerk ist dazu bestimmt, die Anzahl der mit einem Schneidenabschnitt des kreisförmigen Schneidmessers 14 auszuführenden Trennschnitte zu zählen bzw. zu registrieren und mit dem dadurch geschaffenen Kontrollmechanismus sicher zu stellen, dass mit einem Schneidenabschnitt am Schneidmesser 14 nur eine vorgegebene Anzahl Trennschnitte ausgeführt werden können, bevor ein neuer, unverbrauchter Schneidenabschnitt durch das rotierende Weiterschalten des Schneidmessers 14 bereitgestellt wird.
Der Aufbau und die Wirkungsweise des Schaltwerkes an der Schneidvorrichtung ist folgender:

Im Bereich des Zangenkopfteiles ist die mit der Handhabe "H" nebst Schwenkarm 22 ausgestattete Schneidvorrichtung 23 mit Schneidmesser 14 angeordnet, die auf einem Zapfen 24 schwenkbar gelagert ist, um vermittels der Handhabe "H" mit Schwenkarm 22 gegen die Maulbacken 2 und 3 hin, zwischen denen das zu schneidende LWL-Kabel aufgenommen und teilweise eingespannt ist, zur Ausführung des Schneid- bzw. Trennvorganges in Pfeilrichtung "S" eingeschwenkt zu werden.

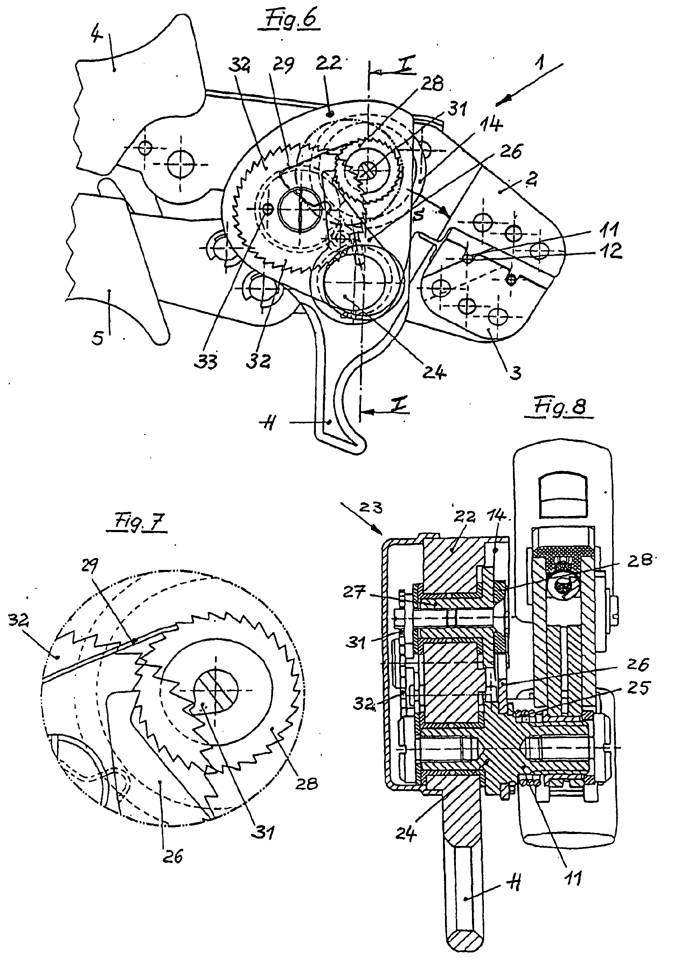

Der Schwenkarm 22, der mit dem Zapfen 24 im Zangenkopfteil gelagert ist, wird zunächst durch eine Feder 25 außer Schneideingriff gehalten, wie das in Fig. 1 und Fig. 6 gezeigt ist.

Auf diesem Schwenkarm 22 ist zugleich das der Schneidvorrichtung 23 erfindungsgemäß zugeordnete Schaltwerk zum intermittierenden Weiterdrehen bzw. Weiterschalten des Schneidmessers 14 angeordnet, das erklärtermaßen dem Zweck dient, nach einer gewissen Anzahl von Trennschnitten den bis dahin im Einsatz befindlichen Abschnitt der Messerschneide durch einen ungebrauchten, neuen Schneidenabschnitt zu ersetzen.

Dieses Schaltwerk wird zunächst gebildet aus einer auf dem Zapfen 24 (Fig. 6 und 8) exzentrisch aufgenommenen Schaltklinke 26 und aus einem auf dem Lagerzapfen 27 des Schneidmessers 14 befestigten, mit diesem drehschlüssig verbundenen Klinkenrad 28.
Mit diesem steht die Schaltklinke 26, durch eine Halte- und Sperrfeder 29 beaufschlagt, in stetem Wirkkontakt, so dass beim Betätigen des Schwenkarmes 22 zur Ausführung des Schneid- und Trennvorganges zugleich vermittels der exzentrisch bewegten Schaltklinke 26 ein Weiterschalten des Klinkenrades 28 um eine Zahnteilung erfolgt.

Je nach Anzahl der Zähne am Klinkenrad 28, im Ausführungsbeispiel vorzugsweise 30 Zähne, werden demzufolge 30 Schaltschritte und damit zunächst 30 Weiterschaltungen am Klinkenrad 28 durch die Schaltklinke 26 durchgeführt, bevor am Schaltrad 32 durch den Nocken 31 eine Zahnteilung weitergeschaltet wird. Das Schaltwerk sieht dabei einen weiteren Mechanismus vor, ehe die vorgesehene Stillsetzung der Schneidvorrichtung erfolgt.

Jeweils nach einer vollen Umdrehung des Klinkenrades 28 kommt, wie ersichtlich, der Nocken 31 mit dem Schaltrad 32 zum Eingriff, in dessen Folge das Schaltrad 32 um eine Zahnteilung weitergeschaltet wird. Bei einer anzunehmenden Zähnezahl von z B. 42 Zähnen bedeutet dies, dass das Schaltwerk 30 x 42 = 1260 Schaltungen zulässt, bevor dieses durch einen entsprechend vorgesehenen Indexbolzen 33, der von außen nicht zugänglich ist, stillgesetzt wird und die Schneidvorrichtung gewolltermaßen gänzlich blockiert.
Nach diesen mit dem Schaltwerk möglichen 1260 Schaltungen, die also der Anzahl der mit dieser Schneidvorrichtung ausführbaren Trennschnitte mit dem Schneidmesser 14 entsprechen, soll die Schneidleistung des Schneidmessers 14 bemessen bzw. begrenzt sein. Nur durch eine autorisierte Werkstatt sollte sodann die Schneidvorrichtung geöffnet und das Schneidmesser ausgetauscht werden.

Die geschaffene Begrenzung und Kontrolle über die erfahrungsgemäß einzuhaltende Nutzungsdauer eines Schneidmessers sichert in hohem Maße die geforderte gleichbleibend gute Oberflächenqualität an der Schneid- bzw. Trennfläche des LWL-Kabels und damit die mit diesem angestrebte effektive Energieübertragung.

### Bezugszeichenliste

- 1: Zange, Zangenkopfteil
- 2: fester Maulbacken
- 3: beweglicher Maulbacken

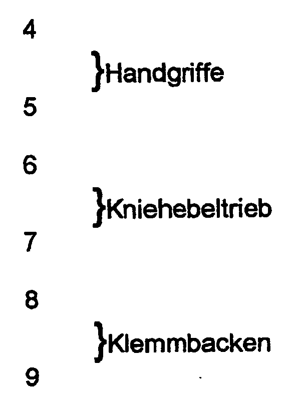

- 10: Klemmprofil als Klemmstempel
- 11: Klemmfläche
- 12: Klemmprofil
- 13: Nut am Klemmbacken 9
- 14: Schneidmesser
- 15: Freimachung
- 16: Spannscheibe
- 17: Messeraufnahmewelle
- 18: Anlageflansch
- 19: Schneidenfase
- 20: Schneidlippe
- 21: Schnittkante am Klemmbacken 9
- 22: Schwenkarm
- 23: Schneidvorrichtung
- 24: Zapfen
- 25: Feder
- 26: Schaltklinke
- 27: Lagerzapfen
- 28: Klinkenrad
- 29: Sperrfeder
- 30 31: Nocken
- 32: Schaltrad
- 33: Indexbolzen

- "A": Einzelheit in Fig. 6
- "H": Handhabe
- "S": Schneidrichtung durch Schneidmesser 14

## Patentansprüche

1. Zangenartiges Werkzeug mit Schneidvorrichtung, die an einem der Zangenmaulbacken angeordnet und zur Ausführung des Schneid- bzw. Trennvorganges durch eine unabhängig von der Zangenschließbewegung betätigbare Handhabe zur Wirkung gebracht wird, wobei
- die Schneidvorrichtung (23) am beweglichen Maulbacken (3) in einem schwenkbar gelagerten, durch eine Handhabe "H" nach dem Zangenmaul hin einschwenkenden, ein Schneidmesser (14) tragenden Schwenkarm (22) angeordnet ist;
- die Schneidvorrichtung (23) einerseits aus dem mit einer einseitig zugeschärften Schneide versehenen, als Rundmesser ausgeführten Schneidmesser (14) und andererseits aus einer zwischen den Zangenmaulbacken (2; 3) ausgebildeten, zur Halterung des LWL-Kabels bestimmten, an diesem einen völligen Formschluss bewirkenden Klemmprofilierung (10; 12) besteht, wobei
- das relativ dünn ausgeführte Schneidmesser (14) auf der Messeraufnahmewelle (17) durch eine axial wirkende Spannscheibe (16) zu hoher Seitenstabilität vorgespannt und mit Beginn des Schneidvorganges an der Körperkante (21) des Klemmbackens(9) gleitend geführt und abgestützt ist und wobei
- die Messerschneide als unsymmetrischer Schneidkeil (19) mit Schneidlippe (20) ausgebildet ist, deren Spanfläche nach der Abfallseite hin angeordnet und dessen Freifläche durch die Messervorspannung gebildet ist,
**dadurch gekennzeichnet daß**,
- im Bereich des abzuschneidenden Endstückes des LWL-Kabels, dieses nurmehr teilflächig durch die Nut (13) der Klemmmatrize gegen den Schneiddruck in Schneidrichtung "S" des Schneidmessers (14) abgestützt ist, während der andere Teil des durch die Nut (13) gebildeten Umschließungsbereiches durch die Freimachung (15) in Wegfall gebracht wurde;
- wobei das zangenartige Werkzeug ein der Schneidvorrichtung (23) zugeordnetes, in Abhängigkeit des einschwenkend bewegten Schwenkarmes (22) schaltendes, aus einer Schaltklinke (26) mit Klinkenrad (28) sowie einem Schaltrad (32) bestehendes Schaltwerk (26; 28; 31; 32) zum Zwecke der Bemessung der Anzahl der Trennschnitte durch das Schneidmesser (14) umfasst, welches eine Anzahl von Schaltungen zulässt, bevor es die Schneidvorrichtung (23) mit Hilfe eines Indexbolzens (33) blockiert, wobei die Anzahl von Schaltimpulsen voreinstellbar ist; und wobei
- die Schneidlippe (20) des Schneidmessers (14) konvex gewölbt ausgebildet und hochfein geglättet ausgeführt ist.

2. Verfahren zum Durchtrennen von Lichtwellenleiterkabeln, **dadurch gekennzeichnet daß** ein Werkzeug nach Anspruch 1 verwendet wird, wobei
- in einem ersten Arbeitsschritt das LWL-Kabel nach erfolgtem Abisolieren des zum Vercrimpen bestimmten Endabschnittes zwischen den als formschlüssig wirkenden Klemmbacken ausgeführten Zangenmaulbacken lagebestimmt aufgenommen,
- anschließend durch Schließen der Zangenmaulbacken das LWL-Kabel an seinem abisolierten Endteil gänzlich formumschlossen, dabei längsseitig arretiert und quer zur Kabelachse festgespannt wird und wobei
- der ab- bzw. durchzutrennende Endabschnitt ohne festhaltende Klemmung nurmehr lose abgestützt und
- der Tennvorgang durch ein zwischen die Klemmbacken einschwenkbares Rundmesser vorgenommen wird und wobei
- das Rundmesser gegen eine an den Klemmbacken angeordnete Führungsfläche mit unter Vorspannung gesetzter Messerschneide vorbei bewegt und ein jeweilig ausgeführter Schnitt des Rundmessers in einem die Benutzungsdauer des Messers bestimmenden Schaltwerk gezählt wird.

## Claims

1. Pliers-like tool with cutting mechanism which is positioned on one of the jaws of the said tool and which is brought to perform the cutting or separating by means of a handhold that can be actuated independently of closing the pliers-like tool, whereas
- the cutting mechanism (23) is positioned on the moving jaw (3) in a pivoted arm (22) which bears a cutting knife (14) and pivots towards the jaws by means of a handhold "H";
- the cutting mechanism (23) consists on the one hand of the cutting knife (14) which is designed as a revolving blade and equipped with a beveled edge on one side and on the other hand of a clamping section (10; 12) formed between the jaws (2; 3) which is intended for holding the fiber optic cable by effecting a complete form closure on said cable, whereas
- the relatively thin cutting knife (14) is pretensioned on the knife locating shaft (17) by a surface plate (16) applying axial pressure for great lateral stability and at the beginning of the cutting operation is slid and guided along the body edge (21) of the gripping jaw (9) and held, and whereas
- the knife edge is designed as asymmetrical cutting wedge (19) with cutting edge (20), whose tool face is positioned toward the scrap side and the flank of said wedge is formed by the knife pretensioning, **characterized in that**
- in the area of the end of the fiber optic cable that is to be cut off, this is in part supported by the groove (13) of the clamping plate against the cutting pressure in cutting direction "S" of the cutting knife (14), while the other part of the enclosing area formed by the groove (13) is brought to fall away by the release (15), whereas
- the cutting edge (20) of the cutting knife (14) has a convex shape and highly fine surface and whereas
- the pliers-like tool includes a ratchet mechanism (26; 28; 31; 32) that is assigned to the cutting mechanism (23) and shifts in relation to the pivoting arm and comprises a catch (26) with ratchet wheel (28) and a notched disk (32) for the purpose of calculating the number of separating cuts by the cutting knife (14) which allows a number of switching operations before it blocks the cutting mechanism (23) with the aid of an index bolt (33), whereas the number of switching actions can be preset;

2. Process for cutting through fiber optic cables, **characterized in that** a tool according claim 1 is used, whereas
- in an initial operation, after completely removing the insulation of the end section that is to be crimped, the fiber optic cable is held at the intended location between the jaws that are designed as gripping jaws effecting a complete form closure,
- then by closing the jaws of the tool, the stripped end of the fiber optic cable is completely enclosed, at the same time is clamped laterally and held securely crosswise to the cable axis and whereas
- the end section to be cut off or separated is now loosely supported without secure clamping and
- the cutting process is carried out by a revolving blade that pivots between the gripping jaws and whereas
- the revolving blade is moved against a guide surface which is positioned on the gripping jaws and has a pretensioned cutting edge and the respective cut implemented by the revolving blade is counted in a ratchet mechanism that determines the period of service of the knife.

## Revendications

1. Outil du type pince à mécanisme de coupe disposé sur l'une des mâchoires de la pince et qui pour exécuter l'opération de coupe ou de sectionnement, s'active moyennant une manette pouvant être actionnée indépendamment du mouvement de fermeture de la pince, à savoir que
- le mécanisme de coupe (23) est disposé sur la mâchoire mobile (3) dans un bras pivotant (22) à logement oscillant, portant une lame (14) et basculant vers la mâchoire sous l'emprise de la manette « H » ;
- le mécanisme de coupe (23) est constitué d'une lame de coupe (14) pourvue d'un tranchant aiguisé d'un côté et conçu à la manière d'une molette d'une part et d'un serre-profil (10 ; 12) réalisant une liaison de forme intégrale, détouré entre les mâchoires (2 ; 3) et destiné à maintenir le câble à fibres optiques d'autre part, à savoir que
- la lame de coupe (14) relativement mince subit sur l'axe porte-lame (17) du fait de la rondelle de serrage (16) à effet axial, une précontrainte lui communiquant une haute stabilité latérale et la faisant coulisser et soutenir au début de l'opération de coupe contre l'arête (21) du mors de serrage(9) à savoir que
- la lame de coupe formant taillant asymétrique (19) est configurée avec une lèvre coupante (20) dont la face d'attaque est disposée côté chute et dont la face de dépouille est formée par la précontrainte de la lame, **caractérisée en ce**ci que
- dans la zone d'extrémité à couper du câble à fibres optiques, celui-ci est désormais supporté sur une partie de sa surface par la rainure (13) de la matrice de serrage s'opposant à l'effort de coupe exercé dans le sens « S » de la lame (14) cependant que l'autre partie de la zone d'encerclement formée par la rainure (13) est vouée à l'élimination par l'échappement (15), à savoir que
- la lèvre coupante (20) de la lame de coupe (14) est configurée avec un bombé convexe et présente un lissage très fin et à savoir que
- l'outil du type pince comprend un encliquetage (26 ; 28 ; 31 ; 32) constitué d'un cliquet (26) avec roue à rochet (28) et d'une roue de commande (32), affecté au mécanisme de coupe (23) et intervenant en fonction du mouvement rentrant du bras pivotant (22) dans le but de mesurer le nombre de sectionnements effectués par la lame de coupe (14), étant entendu que cet encliquetage admet un certain nombre de manoeuvres avant de condamner le mécanisme de coupe (23) moyennant un bonhomme (33) et que le nombre d'impulsions de manoeuvre peut être présélectionné.

2. Procédé pour sectionner les câbles à fibres optiques, **caractérisé en ce**ci qu'il fait appel à un outil selon la revendication 1, à savoir que
- dans la première étape, après dénudage de la portion terminale destinée à être sertie, le câble à fibres optiques est reçu en position correcte entre les mâchoires de pince réalisées avec mors de serrage à liaison de forme intégrale,
- qu'ensuite, le câble à fibres optiques est emprisonné totalement sur son extrémité dénudée du fait de la fermeture des mâchoires de pince, immobilisé en longueur et bloqué perpendiculairement à son axe, à savoir que
- sans le serrage de maintien, la portion terminale à sectionner et à détacher n'est plus que soutenue librement et que
- l'opération de sectionnement est accomplie par une lame circulaire pivotant entre les mors de serrage et à savoir que
- la lame circulaire (molette) passe devant une surface de guidage ménagée sur les mors de serrage avec un tranchant placé en précontrainte et que chaque coupe exécutée par la lame est enregistrée par un encliquetage déterminant la durée d'usage de la lame.
